# EUROPÄISCHE PATENTANMELDUNG

(11) **EP 1 414 225 A1**
(43) Veröffentlichungstag der Anmeldung: **28.04.2004**
(21) Anmeldenummer: 02023551.1
(22) Anmeldetag: 22.10.2002
(51) Int. Cl.: H04M 1/725

(54) **Telekommunikationsvorrichtung und -verfahren**

(71) Anmelder: SIEMENS AKTIENGESELLSCHAFT, 80333 München (DE)
(72) Erfinder: Wilhelm, Hartmut, Dr., 81477 München (DE)

(57) **Zusammenfassung**

Die vorliegende Erfindung betrifft eine Telekommunikationsvorrichtung mit einer ersten Vorrichtung mit Mitteln zur drahtlosen Übertragung (3), einer zweiten Vorrichtung mit Mitteln zur drahtlosen Übertragung (1, 2) und Mitteln, welche zur Identifikation eines Nutzers der Telekommunikationsvorrichtung eingesetzt werden können, wobei die zweite Vorrichtung mit der ersten Vorrichtung kommuniziert. Die Telekommunikationsvorrichtung umfasst des Weiteren Mittel zum Erkennen der lokalen Nähe zwischen der ersten Vorrichtung (3) und der zweiten Vorrichtung (1, 2). Die Erfindung betrifft auch ein Telekommunikationsverfahren.

## Beschreibung

Die vorliegende Erfindung betrifft eine Telekommunikationsvorrichtung und ein Telekommunikationsverfahren.

Entsprechende Telekommunikationsvorrichtungen und -verfahren finden u.a. in Kraftfahrzeugen Einsatz.

Aus der WO 98/57824 ist eine Kraftfahrzeug-Einbauvorrichtung für ein Mobiltelefon bekannt, bei welcher ein in einer Halterung befindliches Mobilfunk-Telefon mit einer Einbauvorrichtung in Verbindung steht. Nachteilig bei der vorgeschlagenen Kraftfahrzeug-Einbauvorrichtung ist jedoch, dass das Mobilfunk-Telefon in eine Halterung gesteckt werden muss. Dies kann vor allem für Personen, die auf Kurzstrecken fahren, beispielsweise Kuriere, umständlich sein. So muss üblicherweise das Mobilfunkgerät aus einer Tasche geholt, oder vom Gürtelclip gelöst, und in die Halterung gesteckt werden. Beim Verlassen des Kraftfahrzeuges muss das Mobilfunkgerät aus der Halterung gezogen und wiederum in eine Tasche gesteckt, oder am Gürtel befestigt werden. Dies ist jedoch bei häufigem Ein- und Aussteigen sehr zeitaufwendig.

Befindet sich das Mobilfunkgerät in der Halterung, so wird es üblicherweise gleichzeitig auch nachgeladen. Eine längere Lebensdauer erreichen die meisten Akku-Typen jedoch, wenn sie erst wieder aufgeladen werden, falls sie schon weitgehend entladen sind und in einem solchen Zustand wieder voll aufgeladen werden. Beim Nachladen im Auto wird der Akku oft nachgeladen, wenn es noch nicht nötig wäre und/oder nicht ganz vollgeladen, weil die Fahrt, während der sich das Mobilfunkgerät in der Halterung befindet, zu kurz ist.

Wenn ein Mobilfunk-Endgeräte-Hersteller eine neue Geräte-Generation entwickelt, die für Kfz-Halterungen mit elektrischen Kontakten geeignet ist, wünschen seine Stammkunden, dass er auf Kompatibilität der mechanischen Abmessungen und der elektrischen Beschaltung mit seinen früheren Halterungen achtet. Dies behindert die Weiterentwicklung von Design und Elektronik.

Ähnliche Probleme ergeben sich, wenn sich ein Mitarbeiter einer Firma nicht an seinem Arbeitsplatz, sondern temporär an dem Arbeitsplatz eines Kollegen befindet. Anrufe und E-Mails werden dann weiterhin an seinen eigentlichen Arbeitsplatz geleitet, so dass ihm wichtige Anrufe entgehen oder er den Inhalt dringender E-Mails zu spät liest.

Der vorliegenden Erfindung liegt somit die Aufgabe zugrunde, eine Telekommunikationsvorrichtung und ein Telekommunikationsverfahren bereitzustellen, welches die Nachteile des Standes der Technik vermeidet.

Diese Aufgabe wird durch eine Telekommunikationsvorrichtung und ein Telekommunikationsverfahren mit den Merkmalen der unabhängigen Ansprüche gelöst. Bevorzugte Ausführungsformen der vorliegenden Erfindung ergeben sich aus den abhängigen Ansprüchen.

Die Telekommunikationsvorrichtung umfasst eine erste Vorrichtung mit Mitteln zur drahtlosen Übertragung, eine zweite Vorrichtung mit Mitteln zur drahtlosen Übertragung und Mitteln, welche zur Identifikation eines Nutzers der Telekommunikationsvorrichtung eingesetzt werden können, wobei die zweite Vorrichtung mit der ersten Vorrichtung kommuniziert, und Mitteln zum Erkennen der lokalen Nähe zwischen der ersten Vorrichtung und der zweiten Vorrichtung. Die Mittel zum Erkennen der lokalen Nähe können sich in der ersten oder/und zweiten Vorrichtung befinden, müssen aber nicht. Bevorzugt gehören sie zur ersten Vorrichtung oder werden ihr zugerechnet, z.B. wenn beide im gleichen Fahrzeug oder am gleichen Arbeitsplatz angeordnet sind. Bei der vorstehend genannten Kommunikation kann es sich um jede Art von Kommunikation handeln. So kann z.B. ein Kanal für die Kommunikation belegt sein. Es ist jedoch auch denkbar, dass eine Kommunikation über Datenpakete oder Datagramme erfolgt. Ebenso kann ein Signal von einer Vorrichtung zur anderen übertragen werden, vorzugsweise von der zweiten Vorrichtung zur ersten Vorrichtung. Die Kommunikation kann also auch in nur einer Richtung erfolgen. Es muss mindestens einmal ein Signal übertragen werden; zweckmäßigerweise werden jedoch mehrfach oder ständig Signale übertragen. Wenn später von einer Funkverbindung die Rede sein wird, ist dabei eine drahtlose Kommunikation in diesem Sinn gemeint. Wenn die Mittel zum Erkennen der lokalen Nähe der ersten Vorrichtung zugerechnet werden können und die zweite Vorrichtung mit den Mitteln zum Erkennen der lokalen Nähe kommuniziert, so liegt eine Kommunikation der zweiten Vorrichtung mit der ersten Vorrichtung vor.

Die vorliegende Erfindung wird nachfolgend beispielhaft an Hand des Ausführungsbeispieles einer Freisprech-Einbauvorrichtung für ein Kraftfahrzeug erläutert. Die vorliegende Erfindung ist jedoch nicht auf eine solche Einbauvorrichtung beschränkt, sondern kann grundsätzlich in abgewandelter Form auch in jeder Art von Telekommunikationssystem Anwendung finden. Beispiele hierfür werden nachstehend beschrieben.

Bei der ersten Vorrichtung kann es sich um eine Kraftfahrzeug-Einbauvorrichtung und bei der zweiten Vorrichtung um ein Mobilfunk-Endgerät handeln. Zwischen der Einbauvorrichtung und dem Mobilfunk-Endgerät des Fahrers des Kraftfahrzeugs werden Signale/Daten über Funk übertragen. Vorzugsweise wird dabei mit sehr kleiner Leistung gesendet, da nur der Bereich um den Fahrerplatz funkversorgt werden muss. Dadurch werden Probleme mit elektromagnetischer Verträglichkeit vermieden, der Stromverbrauch ist niedrig und die Insassen des Kraftfahrzeuges sind nur niedrigen Feldstärken ausgesetzt. Für die Signal-/Datenübertragung über Funk sind grundsätzlich alle drahtlosen Standards einsetzbar, wie beispielsweise DECT (Digital Enhanced Cordless Telecommunications), Bluetooth, HomeRF oder W-LAN (Wireless Local Area Network) wie z.B. Hiperlan/2 oder IEEE 802.11. Bevorzugt unterstützt die erste Vorrichtung zusätzlich einen zellularen Mobilfunkstandard, wie beispielsweise GSM (Global System for Mobile Communications) oder UMTS (Universal Mobile Telecommunications System).

Durch die Mittel zum Erkennen der lokalen Nähe zwischen der ersten Vorrichtung und der zweiten Vorrichtung kann im Falle der Kfz-Einbauvorrichtung automatisch erkannt werden, wann ein Nutzer der Einbau-Vorrichtung mit seinem Mobilfunk-Endgerät in das Kraftfahrzeug eingestiegen ist bzw. aussteigt, so dass die Einbau-Vorrichtung automatisch aktiviert werden kann. Beim Einsteigen bzw. spätestens während der Fahrt soll dazu automatisch die Einbau-Vorrichtung aktiviert werden. Nach dem Abstellen des Motors oder spätestens nach dem Aussteigen soll die Funktion wieder voll auf das Mobilfunk-Endgerät übergehen. Dazu ist es notwendig, dass die Einbauvorrichtung die Gegenwart des Mobilfunk-Endgerätes, und/oder umgekehrt, das Mobilfunk-Endgerät die Gegenwart der Einbau-Vorrichtung, erkennen kann.

Dazu muss das Mobilfunk-Endgerät des Fahrers für ein Zusammenwirken mit der Einbau-Vorrichtung vorbereitet sein. Insbesondere muss es für eine Funkverbindung mit der Einbau-Vorrichtung ausgerüstet sein. Die Schnittstellen zwischen Mobilfunk-Endgerät und Einbauvorrichtung müssen zueinander kompatibel sein.

In einer bevorzugten Ausführungsform der vorliegenden Erfindung erfolgt das Erkennen der lokalen Nähe über eine Feldstärkemessung. Die Feldstärkemessung kann dabei in der ersten und/oder zweiten Vorrichtung vorgenommen werden.

Dem Erkennen der lokalen Nähe geht bevorzugt eine Suche voraus. Dabei achten beispielsweise der ersten Vorrichtung zugerechnete Mittel zum Erkennen der lokalen Nähe auf mögliche Funksignale einer zweiten Vorrichtung.

In einer Weiterbildung der vorliegenden Erfindung ist die erste Vorrichtung geeignet, in ein Fahrzeug eingebaut zu werden, wobei ein Suchen nach und/oder das Erkennen der lokalen Nähe durch am Fahrzeug vorgenommene Aktionen initiiert wird. Die Aktionen können das Stecken des Schlüssels in ein Schloss, das Aufschließen des Fahrzeuges, die Betätigung der Zündung des Fahrzeuges, das Einschalten der Fahrgastraumbeleuchtung des Fahrzeuges, Entriegeln des Lenkradschlosses, das Anschnallen, das Öffnen/Schließen der Fahrertür, Starten des Motors, Einschalten des Autoradios bzw. -telefons usw. umfassen.

Die Bereitschaft des Autotelefons zur Verbindungsaufnahme mit einem sich nähernden Mobilfunk-Endgerät kostet Strom. Der die Batterie entladende Strom für die Bereitschaft kann reduziert werden, wenn die erste Vorrichtung diesen Bereitschaftszustand nur in bestimmten Situationen bereitstellt. Diese Situationen können durch die vorstehend erwähnten Aktionen gegeben sein. Dabei ist eine logische Verknüpfung der verschiedenen Aktionen miteinander denkbar. In einer bevorzugten Ausführungsform wird der Kontakt mit einem am Fahrerplatz lokalisierten, zugriffsberechtigten Mobilfunk-Endgerät auch dann fortgesetzt, wenn Bedingungen, wie die vorstehend ausgeführten, nicht mehr erfüllt sind.

Darüber hinaus muss im Fall von GSM die erste Vorrichtung bei einigen Ausführungsformen erkennen, falls die SIM (Subscriber Identity Module)-Karte aus dem Mobilfunk-Endgerät entnommen wird.

In einer Weiterbildung der vorliegenden Erfindung wird bei mehreren in lokaler Nähe zur ersten Vorrichtung befindlichen zweiten Vorrichtungen eine zweite Vorrichtung in Abhängigkeit von einer Feldstärkemessung ausgewählt. Beispielhaft wird wiederum von einer Einbauvorrichtung und Mobilfunk-Endgeräten ausgegangen. Durch Vorbestimmung kann festgelegt werden, welches Mobilfunk-Endgerät im Falle mehrerer Mobilfunk-Endgeräte im Kraftfahrzeug als das Mobilfunk-Endgerät des Fahrers anzusehen ist. Dies lässt sich mit einer Prioritätsliste verbinden, bei welcher im Fall mehrerer zweiter Vorrichtungen diejenige der ersten Vorrichtung zugeordnet wird, welche die höchste Priorität hat. Anstelle oder zusätzlich zu dieser Möglichkeit kann auch durch eine Ortung ermittelt werden, welches Mobilfunk-Endgerät dasjenige des Fahrers des Kraftfahrzeuges ist. Dazu kann mit einer Antenne im Bereich des Fahrerplatzes, beispielsweise in der Fahrertür, in oder unter dem Fahrersitz, über dem Fahrer oder im Armaturenbrett auf der Fahrerseite, die Feldstärke gemessen werden. Nur im Falle der Überschreitung eines Schwellwertes wird ein Mobilfunk-Endgerät berücksichtigt. Ist es das einzige, so wird es akzeptiert und/oder das Mobilfunk-Endgerät mit dem niedrigsten Pfadverlust (sogenannter "Path Loss") wird ausgewählt. Bei letzterem Fall bietet es sich an, sicherzustellen, dass alle Mobilfunk-Endgeräte mit der gleichen Leistung senden, da dann die Einbauvorrichtung das Mobilfunk-Endgerät mit dem niedrigsten Pfadverlust an der größten Feldstärke erkennt. Es ist auch denkbar, dass die Mobilfunk-Endgeräte von der Einbauvorrichtung aufgefordert werden, Messwerte wie z.B. den Empfangspegel zurückzusenden, wodurch die Auswahlentscheidung beeinflusst werden kann.

In einer Weiterbildung der vorliegenden Erfindung wird bei mehreren vorhandenen zweiten Vorrichtungen eine zweite Vorrichtung aufgrund von Feldstärkemessungen mit mehreren Antennen ausgewählt. Sind z.B. mehrere Antennen in einem Kraftfahrzeug eingebaut, so können durch Messung der Empfangsfeldstärke oder -leistung an verschiedenen Antennen die Positionen der jeweiligen Mobilfunk-Endgeräte (zweite Vorrichtung) bestimmt werden. Aufgrund dieser Positionsbestimmung wird dann das entsprechende Mobilfunk-Endgerät ausgewählt.

In einer anderen Weiterbildung der vorliegenden Erfindung wird bei mehreren vorhandenen zweiten Vorrichtungen eine zweite Vorrichtung durch Peilung ausgewählt. Zur Auswahl jener zweiten Vorrichtung, die sich am Fahrerplatz befindet, werden die in Frage kommenden zweiten Vorrichtungen geortet. Dies kann beispielsweise mit einer Richtantenne erfolgen, insbesondere dann, wenn deren Vorzugsrichtung drehbar ist. Alternativ könnten mehrere Richtantennen verwendet werden. Eine andere Variante der Peilung wäre, bei mehreren Empfangsantennen der ersten Vorrichtung die Laufzeiten von einer zweiten Vorrichtung zu den mehreren Empfangsantennen der ersten Vorrichtung zu vergleichen und daraus eine Richtung zu bestimmen.

In einer Weiterbildung der vorliegenden Erfindung wird bei mehreren vorhandenen zweiten Vorrichtungen eine zweite Vorrichtung mit Hilfe einer Richtantenne ausgewählt. Dabei wird beispielsweise die Hauptkeule auf den Fahrerplatz ausgerichtet. Bei einer Orientierung der Hauptkeule in vertikaler Richtung (Antenne unter dem Fahrer, Hauptkeule nach oben zeigend oder Antenne über dem Fahrer, Hauptkeule nach unten zeigend) ist die Zuordnung besonders klar, da in gleicher Richtung keine weiteren Personen zu erwarten sind. Weitere zweite Vorrichtungen auf anderen Plätzen unterscheiden sich dann durch eine niedrigere Empfangsleistung.

In einer bevorzugten Ausführungsform der vorliegenden Erfindung wird eine Zuordnung zwischen der zweiten Vorrichtung und der ersten Vorrichtung durch eine Abfrage initiiert. Falls die erste Vorrichtung nicht feststellen kann, ob überhaupt eine zweite Vorrichtung, und im Falle mehrerer vorhandener zweiter Vorrichtungen, welche mit der ersten Vorrichtung zusammenwirken soll, so kann eine Abfrage vorgesehen werden. Diese Abfrage kann eine Bestätigung oder einen Widerspruch, beispielsweise durch ein Bedienelement oder eine Sprachsteuerung, erfordern. So kann z. B. nach dem Einsteigen in ein Kraftfahrzeug die Einbauvorrichtung auf der Anzeige des Bordcomputers oder akustisch über den Freisprech-Lautsprecher den Text "Rufnummer 01701234567 zugeordnet" ausgeben. Wird die Anfrage mit "Nein" beantwortet, so wird die Zuordnung abgelehnt. Bei der Sprachsteuerung kann in diesem Zusammenhang eine sprecherabhängige Spracherkennung vorteilhaft sein, weil sie zur Identifizierung des Nutzers beitragen kann. Bei Verwendung einer Sprechererkennung kann die Entscheidungssicherheit noch erhöht werden. Dazu muss die Stimme des betreffenden Teilnehmers (hier des Teilnehmers 01701234567) bekannt sein, und die Stimme des Antwortenden muss mit ihr verglichen werden.

Sitz- und Spiegelposition können ebenfalls bei der Zuordnung berücksichtigt werden. Auch gibt es Fahrzeuge mit mehreren individuellen Fahrzeugschlüsseln, die bestimmten Fahrern zugeordnet werden können und mittels derer das Fahrzeug die Fahrer unterscheidet. Im Falle mehrerer in räumlicher Nähe befindlicher zweiter Vorrichtungen kann hier auch der Schlüssel bei der Zuordnung berücksichtigt werden, insbesondere, welcher Schlüssel im Lenkradschloss steckt.

Bei der schnurlosen Nahbereichskommunikation ist es teilweise erforderlich, Geräte miteinander bekannt zu machen, damit Zugriffsrechte gewährt werden. So muss beispielsweise bei DECT ein Endgerät an einer Basisstation angemeldet werden, damit es über sie Gespräche führen darf. In einer bevorzugten Ausführungsform ist es erforderlich, der ersten Vorrichtung zweite Vorrichtungen bekannt zu geben, mit denen sie zusammenwirken darf, und eventuell zusätzlich umgekehrt der zweiten Vorrichtung bekannt zu geben, mit welchen ersten Vorrichtungen sie zusammenwirken darf. Bei der Zuordnung werden dann nur zulässige Vorrichtungen berücksichtigt. Dabei ist es beispielsweise möglich, dass eine Einbauvorrichtung (erste Vorrichtung) ihr unbekannte Mobilfunk-Endgeräte (zweite Vorrichtungen) ausschließt oder/und dass ein Mobilfunk-Endgerät (hier erste Vorrichtung) eine ihr unbekannte Einbauvorrichtung (hier zweite Vorrichtung), deren Bake/Pilotsignal sie empfängt, ignoriert.

Bei mehreren zweiten Vorrichtungen kann eine Änderung der Zuordnung erforderlich werden. Dies ist beispielsweise der Fall, falls sowohl der Beifahrer als auch der Fahrer eingeschaltete Mobilfunk-Endgeräte mit sich führen, die bei der Einbauvorrichtung angemeldet sind. Wenn zuerst der Beifahrer einsteigt und die Einbauvorrichtung fälschlicherweise zunächst das Mobilfunk-Endgerät des Beifahrers zuordnet und anschließend der Fahrer einsteigt und dessen Mobilfunk-Endgerät als das eher am Fahrerplatz befindliche erkannt wird, wird nach einer Abfrage oder automatisch das Mobilfunk-Endgerät des Fahrers der Einbauvorrichtung zugeordnet. Bei einem Fahrerwechsel, wenn also beispielsweise der Fahrer, dessen Mobilfunk-Endgerät der Einbauvorrichtung zugeordnet ist, auf den Beifahrerplatz rutscht, und der Beifahrer auf der Fahrerseite einsteigt, wird ebenso nach einer Abfrage oder automatisch das Mobilfunk-Endgerät des neuen Fahrers der Einbauvorrichtung zugeordnet, falls es bei der Einbauvorrichtung angemeldet ist.

In einer Weiterbildung der vorliegenden Erfindung kann die Telekommunikationsvorrichtung oder die erste Vorrichtung auch von einer weiteren zweiten Vorrichtung genutzt werden. Bei der beispielhaften Einbauvorrichtung kommen bevorzugt unterschiedliche Lautsprecher und/oder Mikrofone, oder zumindest Richt-Charakteristika für den Fahrer einerseits und den Beifahrer andererseits, zum Einsatz. Es ist auch denkbar, dass gleichzeitiges Telefonieren von Fahrer und Beifahrer ausgeschlossen ist. Insbesondere ist es möglich, dass bei einer schon bestehenden Telefonverbindung dem weiteren Anrufer ein Besetztton ausgegeben wird bzw. der Anruf z. B. auf einen Anrufbeantworter umgeleitet wird. Anrufbeantworter ist hier nicht auf das Endgerät für den Heimbereich beschränkt, sondern schließt auch andere Lösungen, wie sie beispielsweise unter den Namen Sprachbox und Mobilbox bekannt sind, ein.

Nicht immer muss eine Aufzeichnungsmöglichkeit gegeben sein; es ist auch denkbar, dass nur eine Ansage wiedergegeben wird, zum Beispiel die, dass der Teilnehmer derzeit nicht erreichbar ist.

Bei einem ankommenden Ruf kann am Mobilfunk-Endgerät beispielsweise eine Bedienmöglichkeit vorgesehen sein, den Ruf sofort anzunehmen.

Es ist auch denkbar, während eines über die Einbauvorrichtung begonnenen Gesprächs dieses über das Mobilfunk-Endgerät weiterzuführen und dafür eine Bedienmöglichkeit zumindest an einer der beiden Vorrichtungen vorzusehen. Dies kann beispielsweise dann nützlich sein, wenn sich der Fahrer nicht während der gesamten Gesprächsdauer am Fahrerplatz befindet.

Es kann auch vorgesehen sein, dass ein Gespräch wahlweise über die erste oder die zweite Vorrichtung entgegengenommen werden kann.

In einer Weiterbildung der vorliegenden Erfindung werden die Signale von einem Mikrophon der ersten Vorrichtung oder/und Referenzwerte für die zu erkennende Sprache insbesondere bei der Spracherkennung an eine Übertragungsfunktion angepasst. Dabei wird beispielsweise der Klang der Stimme des Nutzers der Telekommunikationsvorrichtung durch ein Mikrophon in der ersten Vorrichtung an den Klang der Stimme, der sich mit einem Mikrophon der zweiten Vorrichtung ergeben würde, angepasst.

Bevorzugt wird die Anpassung bei einer Sprachsteuerung eingesetzt. Die Anpassung ist insbesondere vorteilhaft, falls per Sprachsteuerung aus dem Telefonbuch der zweiten Vorrichtung gewählt werden kann, falls die Sprachsteuerung trainiert werden muss, falls sich die Übertragungsfunktionen von dem Mikrofon der zweiten Vorrichtung einerseits und dem Mikrofon der ersten Vorrichtung andererseits unterscheiden, jeweils einschließlich nachfolgender Audiosignalverstärkung, und falls von der ersten Vorrichtung aus auch eine Sprachsteuerung möglich sein soll, insbesondere eine Wahl aus dem Telefonbuch der zweiten Vorrichtung.

Weiter bevorzugt erfolgt die Anpassung der Signale des Mikrophons der ersten Vorrichtung durch eine Signalverarbeitung, insbesondere eine Filterung. Mit einer Filterung kann die Übertragungsfunktion der ersten Vorrichtung an die Übertragungsfunktion der zweiten Vorrichtung angepasst werden. Alternativ oder zusätzlich können die Referenzwerte für die Spracherkennung umgerechnet werden. Dabei können die Sprachsteuerungs-Referenzwerte für die zu erkennenden gesprochenen Worte (insbesondere Namen) an die Charakteristik des Audio-Pfades der ersten Vorrichtung, gegeben durch die Übertragungsfunktion, angepasst werden. Bei einer Kombination beider Möglichkeiten können beispielsweise sowohl das vom Mikrophon der ersten Vorrichtung aufgenommene Signal als auch die Referenzwerte für die zu erkennende Sprache an eine dritte Übertragungsfunktion angepasst werden. Diesen Lösungen ist gemeinsam, dass die Signale vom Mikrophon der ersten Vorrichtung oder/und Referenzwerte für die zu erkennende Sprache insbesondere bei der Spracherkennung an eine Übertragungsfunktion angepasst werden. Eine solche Anpassung kann auch bei einer Sprechererkennung vorteilhaft eingesetzt werden.

Bevorzugt kann das Erkennen der lokalen Nähe und auch eine Übernahme der Kommunikation von der zweiten Vorrichtung zu der ersten Vorrichtung automatisch erfolgen. Alternativ erfolgt die Übernahme der Kommunikation von der zweiten Vorrichtung zu der ersten Vorrichtung über eine Bedienung an einer der beiden Vorrichtungen. Dabei werden die zur Übernahme erforderliche Aktionen an der jeweils anderen Vorrichtung veranlasst. Wenn beispielsweise durch einen Knopfdruck an der Einbauvorrichtung diese nicht nur sich selbst, sondern auch das Mobilfunk-Endgerät so umkonfiguriert, dass die Sprachkommunikation mittels der Einbauvorrichtung erfolgt, braucht das Mobilfunk-Endgerät für diese Änderung der Einstellung nicht aus der Tasche geholt oder vom Gürtel gelöst zu werden.

Es ist auch denkbar, dass zur Übernahme oder zu einer Umleitung der Kommunikation Aktionen an einer anderen Vorrichtung veranlasst werden, beispielsweise an einer Telefonvermittlung oder einem Server.

Die erste Vorrichtung weist bevorzugt Mittel zur Einund/oder Ausgabe auf, insbesondere Mittel zur elektroakustischen Wandlung wie Mikrofon und Lautsprecher. Dem Träger der zweiten Vorrichtung (Nutzer) wird im Fall der räumlichen Nähe ermöglicht, unter Verwendung der Ein-/Ausgabemittel der ersten Vorrichtung zu telekommunizieren. Beispielsweise wird die Funktion der elektroakustischen Wandlung für die Sprachübertragung von einer Vorrichtung zu einer anderen Vorrichtung, insbesondere von der zweiten Vorrichtung zur ersten Vorrichtung im Fall der lokalen Nähe, übergeben, oder die Funktion der Ein- und/oder Ausgabe wird auf die erste Vorrichtung umgeleitet. Falls überhaupt ein Bedienschritt erforderlich ist, um die Ein-/Ausgabe über die Mittel der ersten Vorrichtung zu leiten, ist er typischerweise deutlich einfacher als nach dem Stand der Technik, da die Zuordnung des Nutzers durch das automatische, berührungslose Erkennen der lokalen Nähe zwischen der ersten und der zweiten Vorrichtung erfindungsgemäß unterstützt wird.

In einer Ausführungsform der vorliegenden Erfindung können in Abhängigkeit von der lokalen Nähe Umleitungen geändert werden. Bevorzugt handelt es sich bei den Umleitungen um Rufumleitungen.

Die eingangs gestellte Aufgabe wird auch durch ein Telekommunikationsverfahren gelöst. Das Telekommunikationsverfahren umfasst die Verfahrensschritte Erkennen der lokalen Nähe zwischen einer ersten Vorrichtung und einer zweiten Vorrichtung, wobei die erste und die zweite Vorrichtung mit Mitteln zur drahtlosen Übertragung ausgestattet sind und die zweite Vorrichtung mit der ersten Vorrichtung kommuniziert. Bei dem Telekommunikationsverfahren wird der Nutzers der zweiten Vorrichtung identifiziert. Das heißt, der Nutzer wird an Hand der zweiten Vorrichtung erkannt. Bevorzugt wird also nicht die tatsächliche Identität des Nutzers geprüft, vielmehr wird die zweite Vorrichtung erkannt, und diese kann zumindest einer Person, einem Personenkreis, einer Rufnummer, einer Benutzerkennung oder Ähnlichem zugeordnet werden. Als rechtmäßiger Nutzer wird beispielsweise angesehen, wer die zweite Vorrichtung mit sich führt. Z.B. kann auch ein Autotelefon, dass sich gegenüber einem Mobilfunk-Endgerät drahtlos so identifiziert, dass das Mobilfunk-Endgerät dessen Rufnummer ermitteln kann, eine zweite Vorrichtung sein, dessen Nutzer - hier gegeben durch die Rufnummer - identifiziert wird. Dies sind Ausführungsbeispiele für die Identifikation oder Erkennung eines Nutzers im Sinne der vorliegenden Erfindung. Weitere Sicherheitsmaßnahmen wie PIN-/Passwort-Abfrage, Sprechererkennung oder Fingerabdrucksensor sind möglich.

Die zweite Vorrichtung (z.B. Mobilfunk-Endgerät) kann die Identifikation auch dadurch ermöglichen, dass sie mit einer Einrichtung (z.B. SIM) in Kontakt steht. Wenn die zweite Vorrichtung beispielsweise ein GSM/DECT-Dual-Mode-Endgerät ist, kann die Zuordnung zu einem Nutzer von der SIM abhängen. Sie kann aber auch für das Gerät fest sein, beispielsweise gebunden an die Seriennummer, die sogenannte IMEI (International Mobile Equipment Identity).

Die Erfindung betrifft ferner ein Mobilfunk-Endgerät zur Verwendung in einer erfindungsgemäßen Telekommunikationsvorrichtung und ein Mobilfunk-Endgerät zur Verwendung mit einem erfindungsgemäßen Telekommunikationsverfahren.

Des Weiteren betrifft die Erfindung eine Einbauvorrichtung, insbesondere eine Kraftfahrzeug-Einbauvorrichtung, zur Verwendung in einer erfindungsgemäßen Telekommunikationsvorrichtung, und eine Einbauvorrichtung zur Verwendung mit einem erfindungsgemäßen Telekommunikationsverfahren.

Die Erfindung wird im Folgenden unter Hinweis auf die beigefügte Zeichnung anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigt:

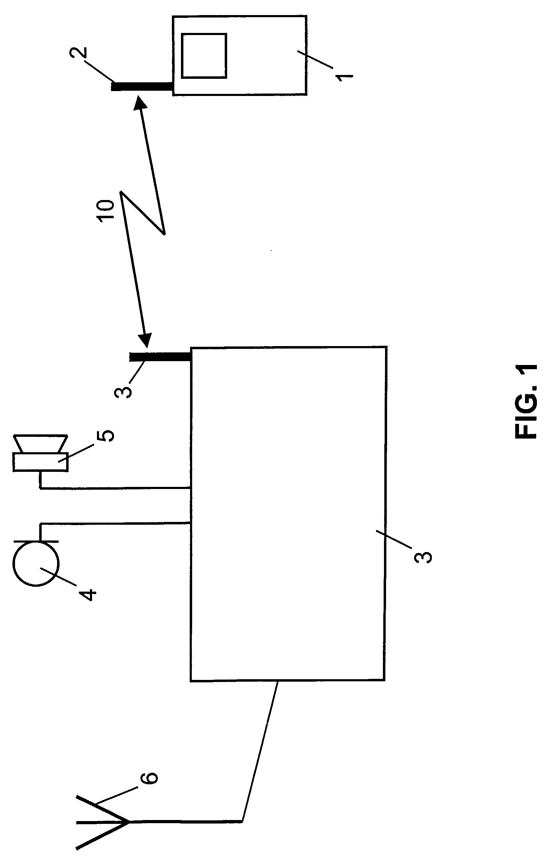

- Figur 1: eine schematische Darstellung eines Ausführungsbeispieles einer Mobilfunk-Vorrichtung für ein Kraftfahrzeug gemäß der vorliegenden Erfindung.

Figur 1 zeigt ein Mobilfunk-Endgerät 1 mit einer dazugehörigen Antenne 2, eine Einbauvorrichtung 3 mit einem Mikrofon 4 und einem Lautsprecher 5. Des Weiteren weist die Einbauvorrichtung 3 eine Sende-/Empfangsvorrichtung 3 auf. Die Sende/Empfangsvorrichtung 3 und das Mobilfunk-Endgerät kommunizieren über eine Funkverbindung 10. Optional kann an die Einbauvorrichtung 3 eine externe Antenne 6 angeschlossen werden. Die externe Antenne 6 ist dann zweckmäßig, wenn die Einbauvorrichtung nicht nur mit dem Mobilfunk-Endgerät 1, sondern auch mit einem Mobilfunknetz kommuniziert.

Steigt ein Fahrer eines Kraftfahrzeuges in dieses ein und befindet sich sein Mobilfunk-Endgerät 1 in seiner Jackentasche, so erkennt die Sende-/Empfangsvorrichtung 3 aufgrund einer Feldstärkemessung die lokale Nähe des Mobilfunk-Endgerätes. Folglich wird zwischen der Einbauvorrichtung 3 und dem Mobilfunk-Endgerät 1 eine Verbindung hergestellt. Eine Kommunikation zwischen den beiden Einheiten ist somit möglich. Der Nutzer kann also über eine Sprachwahlfunktion in seinem Mobilfunk-Endgerät 1 eine Rufnummer auswählen, die Kommunikation findet jedoch nicht mittels der elektroakustischen Wandler des Mobilfunk-Endgeräts 1, sondern mit Hilfe der Freisprech-Vorrichtung 4, 5 statt. Darüber hinaus wird auch nicht zur Kommunikation mit einer Basis-Station über die Antenne 2 gesendet, sondern es wird die externe Antenne 6 der Einbauvorrichtung 3 genutzt. Dies hat den Vorteil, dass, falls sich die Antenne 6 außerhalb des Kraftfahrzeuges befindet, in dem Fahrgastraum des Kraftfahrzeuges nur eine geringe Sendeleistung für die Funkverbindung 10 notwendig ist.

Darüber hinaus ist es auch denkbar, - ähnlich wie für den Empfang eines Zell-Funk-Dienstes (Cell Broadcast) - eine Möglichkeit an der ersten und/oder zweiten Vorrichtung vorzusehen, die Bereitschaft für das Zusammenwirken zu deaktivieren und so den Stromverbrauch zu reduzieren, beispielsweise falls die Freisprechfunktion nicht benötigt wird.

Ein weiteres Ausführungsbeispiel betrifft ein Mobilfunk-Endgerät (zweite Vorrichtung) und eine Einbauvorrichtung (erste Vorrichtung), welche beide den DECT-Standard (Digital Enhanced Cordless Telecommunications) unterstützen. DECT ist ein einheitlicher europäischer Standard für digitale schnurlose Telefone und stellt im Frequenzbereich 1880 - 1900 MHz 120 Kanäle zum Senden und Empfangen zur Verfügung. Die Kanalauswahl erfolgt nach dem Zeitmultiplex-Verfahren mit einer dynamischen Kanalzuordnung. Das bedeutet, dass sich ein Mobilfunk-Endgerät den besten Kanal auswählt und auf diesem auch die Verbindung zur Basisstation aufbaut. Das Mobilfunk-Endgerät weist ein DECT-Endgerät, und die Einbauvorrichtung weist eine DECT-Basisstation auf. Das Mobilfunk-Endgerät muss zuvor einmalig an der Einbauvorrichtung angemeldet werden. Die DECT-Basisstation wird beim Aufschließen des Fahrzeugs, in dem sich die Einbauvorrichtung befindet, eingeschaltet. Das Mobilfunk-Endgerät findet den Träger der DECT-Basisstation und baut eine Kommunikation mit ihr auf. Die DECT-Basisstation identifiziert das Mobilfunk-Endgerät und ortet es. Beim Entriegeln des Lenkradschlosses des Fahrzeuges wird über den Lautsprecher der Freisprecheinrichtung die Statusmeldung "Nutzer XY automatische Rufannahme eingeschaltet" ausgegeben. Wenn innerhalb von 10 Sekunden nicht mit "nein" widersprochen wird, wird die Freisprecheinrichtung des Fahrzeugs zum Zusammenwirken mit dem Mobilfunk-Endgerät freigeschaltet. Die Spracherkennung des Systems ermöglicht, die automatische Rufannahme per Sprachbefehl abzuschalten. Als Zeit, nach der ein Ruf automatisch angenommen wird, sind beispielsweise 15 Sekunden vorbestimmt. Bei einem eintreffenden Ruf klingeln sowohl das Mobilfunk-Endgerät des Benutzers als auch die Freisprecheinrichtung. Wenn der Ruf nicht innerhalb von 15 Sekunden abgewiesen wird, beispielsweise durch ein ins Mikrofon der Freisprecheinrichtung gesprochenes "Nein", oder am Mobilfunk-Endgerät angenommen wird, wird er über die Freisprecheinrichtung automatisch angenommen. Dabei funktioniert die Freisprecheinrichtung ähnlich wie ein drahtloses Headset. Hier kann jedoch zusätzlich zur Sprachübertragung auch die Übertragung von Steuerkommandos wie Gesprächsende oder Start einer Sprachwahl vorgesehen werden, so dass eine Steuerung des Mobilfunk-Endgeräts über Tasten der Einbauvorrichtung möglich wird. Auch Zusatzinformationen können übertragen werden, damit beispielsweise Name/Rufnummer eines Anrufers auf einer Anzeige der Einbauvorrichtung oder des Bordcomputers angezeigt werden können.

Das Fahrzeug kann auch die Funkverbindung zum Mobilfunk-Endgerät nutzen, um über das Mobilfunknetz Informationen zu empfangen und/oder zu senden, beispielsweise für Telematikanwendungen, Ferndiagnose, Ortung, Flottenmanagement, Maut, Verkehrsleitsysteme, Staumeldungen oder/und Navigation.

Wenn die Funkverbindung zwischen Mobilfunk-Endgerät und Einbauvorrichtung abreißt, beispielsweise das Mobilfunk-Endgerät eine vorbestimmte Zeit lang eine Bake der Einbauvorrichtung nicht mehr findet, nimmt das Mobilfunk-Endgerät bei bevorzugten Ausführungsformen seine eigenständige Funktion selbsttätig wieder auf. Dies kann beispielsweise vom Mobilfunk-Endgerät akustisch oder/und auf einer Anzeige im Fahrzeug, dessen Einbauvorrichtung das Abreißen der Funkverbindung bei bevorzugten Ausführungsformen ebenfalls erkennen wird, signalisiert werden. Wenn dies während eines Telefongesprächs passiert, dann wird bevorzugt das Gespräch unterbrochen, denn bei einer unbemerkten Fortsetzung des Gesprächs über die eingebauten elektroakustischen Wandler eines in einer Tasche befindlichen Mobilfunk-Endgerätes bestünde Abhörgefahr.

Am Mobilfunk-Endgerät oder/und an der Einbauvorrichtung kann eine Bedienmöglichkeit vorgesehen sein, um bei einem bestehenden Gespräch beim Einsteigen ins Fahrzeug das Gespräch über die Freisprecheinrichtung fortzusetzen. Umgekehrt kann am Mobilfunk-Endgerät oder/und an der Einbauvorrichtung eine Bedienmöglichkeit vorgesehen sein, um ein über die Freisprecheinrichtung begonnenes Gespräch über die im Mobilfunk-Endgerät eingebauten elektroakustischen Wandler fortzusetzen. Diese Übernahme während eines Gesprächs ist besonders gut zu realisieren, wenn die Einbauvorrichtung wie soeben beschrieben nur den Audiopart übernimmt, nicht jedoch den Funkverkehr mit der Basisstation des zellularen Mobilfunknetzes.

Ein weiteres Ausführungsbeispiel betrifft einen Fahrer eines Kraftfahrzeugs, der ein Mobilfunk-Endgerät für UMTS (Universal Mobile Telecommunications System) mit sich führt. Die USIM (Subscriber Identity Module für UMTS) des Mobilfunk-Endgerätes ermöglicht auch Roaming mit GSM (Global System for Mobile Communications). Im Fahrzeug ist ein GSM-Autotelefon (erste Vorrichtung) eingebaut. Ohne SIM ermöglicht das Autotelefon nur Notrufe. Die SIM kann entweder eingelegt oder drahtlos verbunden werden. Das Autotelefon und das Mobilfunk-Endgerät unterstützen den W-LAN (Wireless Local Area Network)-Standard IEEE 802.11b.

Beim Einsteigen treten Mobilfunk-Endgerät (zweite Vorrichtung) und Autotelefon über W-LAN in Kontakt. Beide Geräte prüfen die Identität des jeweils anderen Gerätes und akzeptieren einander. Durch Ortung stellt die erste Vorrichtung fest, dass das Mobilfunk-Endgerät am Fahrerplatz ist. Eine Übergabe wird eingeleitet, indem das Mobilfunk-Endgerät sich aus dem UMTS-Netz abmeldet. Es stellt dem Autotelefon über W-LAN Informationen der USIM und Informationen über im Gerät gespeicherte Daten zur Verfügung, beispielsweise automatische Netzwahl ein oder aus, sowie trainierte Namen für die Sprachwahl aus dem Telefonbuch. Da das GSM-Autotelefon UMTS nicht unterstützt, passt das UMTS-Mobilfunk-Endgerät die Funktionalität der USIM für das GSM-Autotelefon geeignet an. Das Autotelefon meldet sich unter der Kennung der USIM von dem Mobilfunk-Endgerät im GSM-Netz über eine GSM-Autoantenne an. Der Fahrer des Kraftfahrzeugs kann nun über eine Freisprecheinrichtung des Autotelefons und Sprachwahl Rufnummern aus dem Telefonbuch von dem Mobilfunk-Endgerät wählen. Die W-LAN-Verbindung wird nicht beendet. Sie bildet die Schnittstelle von Autotelefon zu USIM und Daten/Einstellungen im Mobilfunk-Endgerät. Wenn das Mobilfunk-Endgerät ausgeschaltet oder die USIM entnommen wird, so wird das Autotelefon ein etwaiges Gespräch beenden und nur noch Notrufe zulassen.

Wird der Motor des Fahrzeugs abgestellt und die Fahrertür geöffnet, so meldet sich das Autotelefon aus dem GSM-Netz ab, und das Mobilfunk-Endgerät meldet sich im UMTS-Netz wieder an.

Die erste Vorrichtung kann räumlich getrennte Teile aufweisen, z.B. einen Teil für einen schnurlosen Standard für den Fahrerplatz und einen Teil für einen zellularen Standard, der zweckmäßigerweise dicht an der Mobilfunk-Außenantenne sitzt.

Die erste Vorrichtung kann ein vollständiges Autotelefon sein, braucht es aber nicht. Sie kann beispielsweise ähnlich einem drahtlosen Headset nur als drahtlos verbundene Freisprecheinrichtung arbeiten - also ohne Sende/Empfangsvorrichtung für einen zellulares Mobilfunknetz - oder wie ein unvollständiges Mobilfunk-Endgerät, dem die SIM sowie einige Konfigurationsmöglichkeiten fehlen und das sich über eine drahtlose Schnittstelle zum Mobilfunk-Endgerät mit Teilen des Mobilfunk-Endgeräts zu einem funktionsfähigen Gesamtsystem ergänzt. Wenn die Einbauvorrichtung den Funkverkehr mit dem zellularen Mobilfunknetz führt, hat dies die Vorteile, dass eine Außenantenne genutzt werden kann und dass das Mobilfunk-Endgerät weniger Strom verbraucht.

Im Autotelefon (erste Vorrichtung) kann sich auch eine Twin-SIM oder Dual-SIM zur SIM des Fahrers befinden. Es ist auch denkbar, dass mehrere SIMs ins Autotelefon gesteckt werden, damit es mit SIMs unterschiedlicher Fahrer zusammenwirken kann. Das Autotelefon könnte dann ohne die zweite Vorrichtung telefonieren. Damit am Autotelefon nicht stets neu die PIN für die jeweilige SIM eingegeben werden muss, kann das Autotelefon die jeweilige PIN speichern, bis die zugehörige SIM herausgenommen oder die Stromversorgung des Autotelefons unterbrochen wird. Dadurch wird ein Diebstahlschutz erreicht. Es ist denkbar, dass das Mobilfunk-Endgerät sich im Mobilfunknetz abmeldet und das Autotelefon sich mit der entsprechenden SIM anmeldet, sobald sich ein Mobilfunk-Endgerät mit einer Rufnummer auf dem Fahrerplatz befindet, zu der das Autotelefon eine passende SIM hat. Umgekehrt sollten sich das Autotelefon abmelden und das Mobilfunk-Endgerät wieder anmelden, sobald das Mobilfunk-Endgerät den Fahrerplatz verlässt. Dabei übermittelt das Mobilfunk-Endgerät drahtlos eine Information über seine Rufnummer an das Autotelefon. Diese Vorgehensweise ist auch bei Mobilfunk-Standards verwendbar, bei denen es keine SIM wie bei GSM gibt, falls Mobilfunk-Endgerät und Autotelefon mit der gleichen Rufnummer arbeiten können. Insbesondere wenn das Netz kein An- und Abmelden, in GSM IMSI(International Mobile Subscriber Identity)-Attach/IMSI-Detach, verlangt, kann es genügen, wenn die Geräte anstelle von An- und Abmelden aktiv und inaktiv werden.

Anstelle dieser mehreren SIMs oder in Kombination mit mehreren SIMs ist es auch denkbar, dass eine SIM mehrere Rufnummern bzw. IMSIs unterstützt, wobei beispielsweise durch verschiedene PINs jeweils die zugehörige Rufnummer bzw. IMSI ausgewählt werden kann. Dadurch können verschiedene Teilnehmer auch dann das Verfahren nutzen, wenn das Autotelefon nur eine SIM-Karte aufnehmen kann.

In einem weiteren Ausführungsbeispiel haben Autotelefon und Mobilfunk-Endgerät unterschiedliche Rufnummern. Bevorzugt ist dem Mobilfunk-Endgerät die Rufnummer des Autotelefons bekannt, oder sie wird ihm drahtlos übermittelt. Sobald sich das Mobilfunk-Endgerät auf dem Fahrerplatz befindet, aktiviert es eine Rufumleitung an die Rufnummer des Autotelefons. Beim Verlassen des Fahrerplatzes deaktiviert es die Rufumleitung. Dabei kann die Einbauvorrichtung die zweite und das Mobilfunk-Endgerät die erste Vorrichtung sein: Die Einbauvorrichtung, welche ein Autotelefon aufweist, strahlt beispielsweise, wenn eine Person auf dem Fahrersitz sitzt, mit ganz kleiner Reichweite die Identität und/oder die Rufnummer aus. (Zum Erkennen, ob eine Person auf dem Fahrerplatz sitzt, gibt es Sensoren, von deren Signal im Kollisionsfall die Gasmenge von Airbags abhängt.) Das Mobilfunk-Endgerät des Fahrers erkennt die Einbauvorrichtung und lässt Anrufe an die Rufnummer des Autotelefons umleiten. Wenn der Fahrerplatz verlassen wird, strahlt die Einbauvorrichtung nicht mehr Identität und/oder Rufnummer aus. Das Mobilfunk-Endgerät hebt daraufhin die Anrufumleitung auf.

Auch ist denkbar, dass mehrere Mobilfunk-Endgeräte eine Anrufumleitung auf das Autotelefon machen. Zweckmäßigerweise wird eine Möglichkeit vorgesehen, auch während eines Gespräches von Hand auszuwählen, von welchem Platz aus die Freisprecheinrichtung genutzt werden soll.

Wenn der Fahrer oder ein Mitfahrer von verschiedenen Endgeräten aus kommuniziert, er aber bei abgehender Kommunikation dem Netz stets als der gleiche Nutzer bekannt ist, kann seine bevorzugte Rufnummer anstelle der der tatsächlich verwendeten Endgeräte/SIMs dem Angerufenen angezeigt werden. Diese Funktion wird vorzugsweise im Mobilfunknetz realisiert. Dadurch erkennen die Angerufenen den Anrufer leichter an seiner Rufnummer, und ein eventueller Rückruf geht an die bevorzugte Rufnummer, von der aus gegebenenfalls geeignet weitergeleitet wird.

Beim Aussteigen kann das Autotelefon in einer Weiterbildung des Ausführungsbeispieles alternativ oder zusätzlich eine Umleitung auf das Mobilfunk-Endgerät eines Insassen, insbesondere des Fahrers, aktivieren, und beim Einsteigen deaktivieren. Der damit verbundene Vorteil wird nachfolgend erläutert: Der Fahrer gibt potentiellen Anrufern als seine Mobilrufnummer die Nummer der im Autotelefon eingelegten SIM an, und das Autotelefon leitet Anrufe auf die ihm bekannte Rufnummer des Mobilfunk-Endgeräts des Fahrers um, wenn der Fahrer nicht auf dem Fahrerplatz sitzt. Falls die Einbauvorrichtung ein für mehrere Benutzer geeignetes Autotelefon, insbesondere eines für mehrere SIM-Karten, aufweist und/oder eine mehrere Rufnummern bzw. IMSIs unterstützende SIM verwendet wird, und die Einbauvorrichtung nicht nur die Anwesenheit der zugehörigen Teilnehmer im Fahrzeug erkennen, sondern auch noch deren Plätze unterscheiden kann, kann es bei ankommenden Anrufen automatisch die elektroakustischen Wandler mit der passenden Richtcharakteristik aktivieren.

Diese Weiterbildungen haben gemeinsam, dass in Abhängigkeit der lokalen Nähe Umleitungen geändert werden. Eine Änderung einer Umleitung kann Aktionen umfassen wie beispielsweise Einrichten, Setzen, Aufheben, Löschen einer Rufumleitung oder Ersetzen des aktuellen Ziels durch ein neues Ziel.

Das Erkennen der lokalen Nähe, insbesondere Beginn und Ende, Ein- und Aussteigen, kann ein Kriterium für eine Änderung einer Rufumleitung sein. Weitere Kriterien können hinzukommen, einige wie z.B. das Abstellen des Motors wurden bereits aufgeführt.

Bevorzugt erkennen der ersten Vorrichtung (hier Einbauvorrichtung) zugerechnete Mittel die lokale Nähe der zweiten Vorrichtung, hier insbesondere des Mobilfunk-Endgeräts. Die zweite Vorrichtung könnte aber auch eine andere Vorrichtung sein, die der Teilnehmer mit sich führt, beispielsweise ein drahtlos lesbarer Ausweis, ein implantierter Chip oder ein drahtlos funktionierender Autoschlüssel. Der drahtlos funktionierende Autoschlüssel könnte beispielsweise ein Autoschlüssel sein mit Funkfernbedienung für die Türverriegelung o-der/und ein Autoschlüssel, der einen drahtlos lesbaren Kode/Schlüssel aufweist, beispielsweise wie bei Wegfahrsperren.

Als weiteres Ausführungsbeispiel wird eine Kraftfahrzeug-Einbauvorrichtung und ein Mobilfunk-Endgerät beschrieben. Beide Vorrichtungen verfügen über eine Bluetooth-Schnittstelle. Bluetooth ist eine Technologie zur Funkübermittlung von Sprache und Daten über kurze Strecken im global verfügbaren 2,4-GHz-ISM-Band (Industrial Scientific Medical). Die Einbauvorrichtung wartet darauf, dass ihr Bluetooth-Modul das angemeldete Endgerät findet. Sobald es gefunden wurde, wird dessen Position geschätzt. Dazu ist die Bluetooth-Antenne der Einbauvorrichtung am Fahrerplatz angeordnet. Wenn sich das Endgerät in einem ungenutzten Zustand (Idle Mode) befindet, fragt die Einbauvorrichtung Speicherinhalte aus dem Endgerät und dessen SIM ab und übernimmt dann weitgehend dessen Funktion. Das Endgerät muss dabei eingeschaltet bleiben. Es liefert Speicherinhalte aus seinem Speicher und der SIM-Karte und stellt sicher, dass sich die Einbauvorrichtung abschaltet, sobald die SIM entfernt wird. Bei einigen Zeitgebern (Timern) wie z.B. für "Periodic Location Update" (Periodische Orts-Fortschreibung) kann die Funktion sowohl im Endgerät verbleiben, als auch von der Einbauvorrichtung übernommen und beim Aussteigen zurückgegeben werden. Der Fahrer kann per Sprachwahl auf das Telefonbuch auf der SIM zugreifen. SMS (Short Message Service)-Nachrichten, die während der Fahrt eintreffen, werden nicht nur vorgelesen, sondern auch auf der SIM-Karte gespeichert. Das Aufenthaltsgebiet, d.h. die sogenannte "Location Area", und der Deckname, d.h. die sogenannte "TMSI" (Temporary Mobile Subscriber Identity) werden beispielsweise ebenfalls auf der SIM gespeichert. Die Einbauvorrichtung übernimmt folglich Transceiver-, Modem-, Mensch-Maschine-Schnittstelle (MMI)- und Audiofunktionen. Bei der Verschlüsselung (Ciphering) ist das Endgerät eingebunden, da sich in diesem die SIM-Karte befindet. Befindet sich die Einbauvorrichtung wiederum im Idle Mode und erkennt, dass der Nutzer des Endgeräts den Fahrerplatz verlässt, so deaktiviert sie sich und reaktiviert das Endgerät. Bevorzugt erfolgt eine abhörsichere Übertragung zwischen Endgerät und Einbauvorrichtung.

Als weiteres Ausführungsbeispiel wird der Einsatz der vorliegenden Erfindung in einer Firma mit mehreren Mitarbeitern erläutert. Ein Mitarbeiter A hat einen berührungslos lesbaren Mitarbeiterausweis (zweite Vorrichtung). Die zugehörigen Ausweisleser fragen die Ausweise über Funk ab und identifizieren dadurch die Mitarbeiter. Mitarbeiter A ist nicht an seinem Arbeitsplatz, sondern am Arbeitsplatz eines Mitarbeiters B. Ein Ausweisleser am Arbeitsplatz von Mitarbeiter B, beispielsweise an seinem vernetzten Rechner (erste Vorrichtung) erkennt die lokale Nähe von Mitarbeiter A und gibt dem Netz den Aufenthaltsort des Mitarbeiters A bekannt. Anrufe und E-Mails mit hoher Priorität für Mitarbeiter A werden nun an den Arbeitsplatz von Mitarbeiter B geleitet, solange der Ausweisleser am Arbeitsplatz von Mitarbeiter B die Anwesenheit des Mitarbeiters A erkennt.

Bei Eingang einer Nachricht für Mitarbeiter A erscheint auf dem Bildschirm von Mitarbeiter B beispielsweise die Meldung: "Neue, dringende Nachricht für Kennung A. Möchten Sie die Nachricht jetzt lesen?" Bei "Ja" wird noch einmal die Präsenz von Mitarbeiter A geprüft und danach sein Passwort abgefragt. Während die E-Mail für Mitarbeiter A angezeigt wird, wird seine Anwesenheit regelmäßig geprüft. Wenn das Fenster auf dem Bildschirm des Mitarbeiters B nicht geschlossen wird, bevor Mitarbeiter A den Arbeitsplatz von Mitarbeiter B verlässt, wird das Fenster beim Verlassen automatisch geschlossen.

Bei einem Anruf für Mitarbeiter A erscheint am Endgerät von Mitarbeiter B (erste Vorrichtung) in der Anzeige sowohl eine Identifikation des Anrufenden, soweit verfügbar, als auch eine Identifikation des Gerufenen in Form von Name oder/und Telefonnummer. Der Anrufende bekommt, soweit möglich, die Umleitung ebenfalls angezeigt.

In Abhängigkeit des Aufenthaltsorts wird insbesondere die ankommende Kommunikation geleitet. (Leiten und Leitung bezieht sich dabei auf den Weg, insbesondere auf Ort der Quelle und Ort der Senke einer Kommunikation, und ist nicht primär im Sinne elektrischer Leitung zu verstehen.) Dies kann beispielsweise durch eine Anrufumleitung zum jeweils nächstgelegenen Telefon erfolgen. Wenn die Nähe oder die Anwesenheit endet, wird auch bevorzugt ankommende Kommunikation nicht mehr zu diesem Ort geleitet. Sie kann dann beispielsweise zu einem Speichermedium wie einem Anrufbeantworter oder an einen anderen Ort geleitet werden, von welchem anzunehmen ist, dass der Nutzer sich dorthin begibt. Letzteres ist insbesondere dann vorteilhaft, wenn an dem Ort, zu dem sich der Nutzer begibt, keine geeigneten Mittel zum Erkennen der lokalen Nähe und zum Verändern des Zielortes der Kommunikation vorhanden ist. Wohin die Kommunikation beim Verlassen geleitet wird, kann auch zeitabhängig, insbesondere uhrzeitabhängig, sein. Ankommende Kommunikation kann auch automatisch beantwortet werden, beispielsweise mit einer Ansage oder mit einem Hinweistext. Bevorzugt wird die ankommende Kommunikation dazu zu einer für diesen Zweck geeigneten Vorrichtung geleitet.

Wenn die Einrichtung, die zuletzt die Anwesenheit oder Nähe des Nutzers erkannt hat, beweglich ist, beispielsweise bei einer Einrichtung in einem Fahrzeug, kann es auch ortsabhängig sein, wohin die Kommunikation beim Verlassen geleitet wird. Bevorzugt werden in diesem Fall Mittel zur Positionsbestimmung genutzt.

Bei Kommunikation wird hier insbesondere an Telekommunikation/elektronische Kommunikation gedacht, also beispielsweise
- E-Mails,
- Telefaxe,
- Fernschreiben,
- Telefonanrufe, Videoanrufe,
- Microsoft-Netmeeting-Anrufe,
- sofort übermittelte Botschaften (sogenannte instant messages) oder
- personenbezogene Lautsprecherdurchsagen.

## Patentansprüche

1. Telekommunikationsvorrichtung, aufweisend:
- eine erste Vorrichtung mit Mitteln zur drahtlosen Übertragung (3),
- eine zweite Vorrichtung mit Mitteln zur drahtlosen Übertragung (1, 2) und Mitteln, welche zur Identifikation eines Nutzers der Telekommunikationsvorrichtung eingesetzt werden können, wobei die zweite Vorrichtung mit der ersten Vorrichtung kommuniziert,
**gekennzeichnet durch**
- Mittel zum Erkennen der lokalen Nähe zwischen der ersten Vorrichtung (3) und der zweiten Vorrichtung (1, 2).

2. Telekommunikationsvorrichtung nach Anspruch 1,
**dadurch gekennzeichnet , dass** das Erkennen der lokalen Nähe über eine Feldstärkemessung erfolgt.

3. Telekommunikationsvorrichtung nach Anspruch 2,
**dadurch gekennzeichnet, dass** die Feldstärkemessung in der ersten Vorrichtung und/oder der zweiten Vorrichtung vorgenommen wird.

4. Telekommunikationsvorrichtung nach einem der vorhergehenden Ansprüche,
**dadurch gekennzeichnet, dass** die erste Vorrichtung geeignet ist, in ein Fahrzeug eingebaut zu werden, und ein Suchen nach und/oder das Erkennen der lokalen Nähe durch am Fahrzeug vorgenommene Aktionen initiiert wird.

5. Telekommunikationsvorrichtung nach einem der vorhergehenden Ansprüche,
**dadurch gekennzeichnet, dass** bei mehreren vorhandenen zweiten Vorrichtungen ein zweite Vorrichtung in Abhängigkeit von einer Feldstärkemessung ausgewählt wird.

6. Telekommunikationsvorrichtung nach einem der Ansprüche 1 bis 4,
**dadurch gekennzeichnet, dass** bei mehreren vorhandenen zweiten Vorrichtungen eine zweite Vorrichtung aufgrund von Feldstärkemessungen mit mehreren Antennen ausgewählt wird.

7. Telekommunikationsvorrichtung nach einem der vorhergehenden Ansprüche,
**dadurch gekennzeichnet, dass** bei mehreren vorhandenen zweiten Vorrichtungen eine zweite Vorrichtung durch Peilung ausgewählt wird.

8. Telekommunikationsvorrichtung nach einem der vorhergehenden Ansprüche,
**dadurch gekennzeichnet, dass** bei mehreren vorhandenen zweiten Vorrichtungen eine zweite Vorrichtung mit Hilfe einer Richtantenne ausgewählt wird.

9. Telekommunikationsvorrichtung nach einem der vorhergehenden Ansprüche,
**dadurch gekennzeichnet, dass** durch eine Abfrage eine Zuordnung zwischen der ersten Vorrichtung und der zweiten Vorrichtung initiiert wird.

10. Telekommunikationsvorrichtung nach einem der vorhergehenden Ansprüche,
**dadurch gekennzeichnet, dass** die Telekommunikationsvorrichtung oder die erste Vorrichtung auch von einer weiteren zweiten Vorrichtung genutzt werden kann.

11. Telekommunikationsvorrichtung nach einem der vorhergehenden Ansprüche,
**dadurch gekennzeichnet, dass** die Signale von einem Mikrophon der ersten Vorrichtung (4) oder/und Referenzwerte für die zu erkennende Sprache insbesondere bei der Spracherkennung an eine Übertragungsfunktion angepasst werden.

12. Telekommunikationsvorrichtung nach einem der vorhergehenden Ansprüche,
**dadurch gekennzeichnet, dass** das Erkennen der lokalen Nähe und auch eine Übernahme der Kommunikation insbesondere von der zweiten Vorrichtung zu der ersten Vorrichtung automatisch erfolgen.

13. Telekommunikationsvorrichtung nach einem der vorhergehenden Ansprüche,
**dadurch gekennzeichnet, dass** das Erkennen des Endes der lokalen Nähe und auch eine Rückgabe der Kommunikation insbesondere von der ersten Vorrichtung zu der zweiten Vorrichtung automatisch erfolgen.

14. Telekommunikationsvorrichtung nach einem der vorhergehenden Ansprüche,
**dadurch gekennzeichnet, dass** zur Übernahme der Kommunikation von der zweiten Vorrichtung zu der ersten Vorrichtung eine Bedienung an einer der beiden Vorrichtungen genügt, und dass diese erforderlichenfalls Aktionen zur Übernahme an einer anderen Vorrichtung veranlasst.

15. Telekommunikationsvorrichtung nach einem der vorhergehenden Ansprüche,
**dadurch gekennzeichnet, dass** in Abhängigkeit von der lokalen Nähe Umleitungen geändert werden.

16. Mobilfunk-Endgerät (1) zur Verwendung in einer Telekommunikationsvorrichtung nach einem der vorhergehenden Ansprüche.

17. Einbauvorrichtung, insbesondere Kraftfahrzeug-Einbauvorrichtung (3), zur Verwendung in einer Telekommunikationsvorrichtung nach einem der Ansprüche 1 bis 15.

18. Telekommunikationsverfahren, aufweisend die Verfahrensschritte:
- Erkennen der lokalen Nähe zwischen einer ersten Vorrichtung (3) und einer zweiten Vorrichtung (1, 2), wobei die erste und die zweite Vorrichtung mit Mitteln zur drahtlosen Übertragung (3) ausgestattet sind und die zweite Vorrichtung mit der ersten Vorrichtung kommuniziert, und
- Identifizieren eines Nutzers der zweiten Vorrichtung.

19. Telekommunikationsverfahren nach Anspruch 18,
**dadurch gekennzeichnet, dass** das Erkennen der lokalen Nähe über eine Feldstärkemessung erfolgt.

20. Telekommunikationsverfahren nach einem der Ansprüche 18 oder 19,
**dadurch gekennzeichnet, dass** die Feldstärkemessung in der ersten Vorrichtung und/oder der zweiten Vorrichtung vorgenommen wird.

21. Telekommunikationsverfahren nach einem der Ansprüche 18 bis 20,
**dadurch gekennzeichnet, dass** die erste Vorrichtung geeignet ist, in ein Fahrzeug eingebaut zu werden, und ein Suchen nach und/oder das Erkennen der lokalen Nähe durch am Fahrzeug vorgenommene Aktionen initiiert wird.

22. Telekommunikationsverfahren nach einem der Ansprüche 18 bis 21,
**dadurch gekennzeichnet, dass** bei mehreren vorhandenen zweiten Vorrichtungen ein zweite Vorrichtung in Abhängigkeit von einer Feldstärkemessung ausgewählt wird.

23. Telekommunikationsverfahren nach einem der Ansprüche 18 bis 22,
**dadurch gekennzeichnet, dass** bei mehreren vorhandenen zweiten Vorrichtungen eine zweite Vorrichtung aufgrund von Feldstärkemessungen mit mehreren Antennen ausgewählt wird.

24. Telekommunikationsverfahren nach einem der Ansprüche 18 bis 23,
**dadurch gekennzeichnet , dass** bei mehreren vorhandenen zweiten Vorrichtungen eine zweite Vorrichtung durch Peilung ausgewählt wird.

25. Telekommunikationsverfahren nach einem der Ansprüche 18 bis 24,
**dadurch gekennzeichnet, dass** bei mehreren vorhandenen zweiten Vorrichtungen eine zweite Vorrichtung mit Hilfe einer Richtantenne ausgewählt wird.

26. Telekommunikationsverfahren nach einem der Ansprüche 18 bis 25,
**dadurch gekennzeichnet, dass** durch eine Abfrage eine Zuordnung zwischen der ersten Vorrichtung und der zweiten Vorrichtung initiiert wird.

27. Telekommunikationsverfahren nach einem der Ansprüche 18 bis 26,
**dadurch gekennzeichnet, dass** die Telekommunikationsvorrichtung oder die erste Vorrichtung auch von einer weiteren zweiten Vorrichtung genutzt werden kann.

28. Telekommunikationsverfahren nach einem der Ansprüche 18 bis 27,
**dadurch gekennzeichnet, dass** die Signale von einem Mikrophon der ersten Vorrichtung (4) oder/und Referenzwerte für die zu erkennende Sprache insbesondere bei der Spracherkennung an eine Übertragungsfunktion angepasst werden.

29. Telekommunikationsverfahren nach einem der Ansprüche 18 bis 28,
**dadurch gekennzeichnet, dass** das Erkennen der lokalen Nähe und auch eine Übernahme der Kommunikation insbesondere von der zweiten Vorrichtung zu der ersten Vorrichtung automatisch erfolgen.

30. Telekommunikationsverfahren nach einem der Ansprüche 18 bis 29,
**dadurch gekennzeichnet, dass** das Erkennen des Endes der lokalen Nähe und auch eine Rückgabe der Kommunikation insbesondere von der ersten Vorrichtung zu der zweiten Vorrichtung automatisch erfolgen.

31. Telekommunikationsverfahren nach einem der Ansprüche 18 bis 30,
**dadurch gekennzeichnet, dass** zur Übernahme der Kommunikation von der zweiten Vorrichtung zu der ersten Vorrichtung eine Bedienung an einer der beiden Vorrichtungen genügt, und dass diese erforderlichenfalls Aktionen zur Übernahme an einer anderen Vorrichtung veranlasst.

32. Telekommunikationsverfahren nach einem der Ansprüche 18 bis 31,
**dadurch gekennzeichnet, dass** in Abhängigkeit von der lokalen Nähe Umleitungen geändert werden.

33. Mobilfunk-Endgerät (1) zur Verwendung mit einem Telekommunikationsverfahren nach einem der Ansprüche 18 bis 32.

34. Einbauvorrichtung, insbesondere Kraftfahrzeug-Einbauvorrichtung (3), zur Verwendung mit einem Telekommunikationsverfahren nach einem der Ansprüche 18 bis 32.
